(19) **Europäisches Patentamt / European Patent Office / Office européen des brevets**

(11) **EP 4 338 395 B1**

(12) **EUROPEAN PATENT SPECIFICATION**

(45) Date of publication and mention
of the grant of the patent:
**10.09.2025 Bulletin 2025/37**

(21) Application number: **22708829.1**

(22) Date of filing: **10.02.2022**

(51) International Patent Classification (IPC):
*H04L 43/50* (2022.01)       *H04W 24/06* (2009.01)
*H04L 41/16* (2022.01)       *G06N 20/20* (2019.01)
*G06F 11/3668* (2025.01)    *G06F 40/216* (2020.01)
*G06F 40/30* (2020.01)

(52) Cooperative Patent Classification (CPC):
**H04L 43/50; G06F 11/3684; G06F 40/216;
G06F 40/30; H04W 24/06;** G06N 20/00; H04L 41/16

(86) International application number:
**PCT/EP2022/053260**

(87) International publication number:
**WO 2022/242923 (24.11.2022 Gazette 2022/47)**

(54) **ARTIFICIAL INTELLIGENCE BASED COGNITIVE TEST SCRIPT GENERATION**

AUF KÜNSTLICHER INTELLIGENZ BASIERENDE ERZEUGUNG EINES KOGNITIVEN
TESTSKRIPTS

GÉNÉRATION DE SCRIPT DE TEST COGNITIF BASÉ SUR L'INTELLIGENCE ARTIFICIELLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.05.2021 IN 202111021945**

(43) Date of publication of application:
**20.03.2024 Bulletin 2024/12**

(73) Proprietor: **Telefonaktiebolaget LM Ericsson
(publ)
164 83 Stockholm (SE)**

(72) Inventors:
• **TAHVILI, Sahar
17163 Solna (SE)**
• **GUSTAFSSON, Harald
226 47 Lund (SE)**
• **OLETI, Manoj
Hyderabad, Telangana 500084 (IN)**
• **ABEDIN, Mainul
Kolkata, West Bengal 700135 (IN)**

(74) Representative: **Ericsson
Patent Development
Torshamnsgatan 21-23
164 80 Stockholm (SE)**

(56) References cited:
**US-A1- 2020 019 492**

• **"Methods for Testing and Specification (MTS);
Network Integration Testing (NIT);
Interconnection; Reasons and goals for a global
service testing approach; ETSI TR 101 667",
TECHNICAL REPORT, EUROPEAN
TELECOMMUNICATIONS STANDARDS
INSTITUTE (ETSI), 650 ROUTE DES LUCIOLES,
SOPHIA ANTIPOLIS CEDEX, F-06921, FRANCE,
vol. MTS, no. V1.1.2, 1 July 1999 (1999-07-01),
XP014004946**
• **CHRISTOPHER D MANNING ET AL: "An
Introduction to Information Retrieval", 1 April
2009 (2009-04-01), pages 1 - 569, XP007919921,
Retrieved from the Internet <URL:http://nlp.
stanford.edu/IR-book/pdf/irbookprint.pdf>**

## Description

TECHNICAL FIELD

The present disclosure relates to computerized systems, such as communication systems, and, in particular, to systems and methods for testing computerized systems.

BACKGROUND

Computerized systems, such as communication systems, control systems, management systems, financial systems, etc., can be complex systems with multiple programmable components that interact with each other and/or with elements, nodes, interfaces, etc., within and/or outside the system.

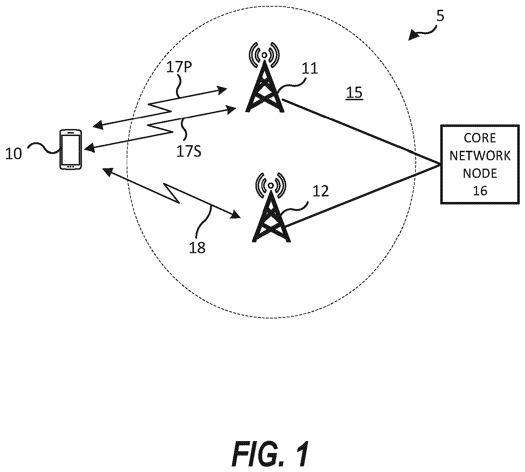

For example, a simplified wireless communication system 20 is illustrated in **Figure 1.** The system 5 includes a user equipment (UE) 10 that communicates with one or more access nodes 11, 12 using radio connections comprising component carriers 17P, 17S, 18. The access nodes 11, 12 are connected to a core network node 16. The access nodes 11-12 are part of a radio access network 15. As shown in **Figure 1,** a UE 10 can be configured via carrier aggregation to communicate over multiple component carriers 17P, 17S to/from a single access node 11.

For wireless communication systems pursuant to 3GPP Evolved Packet System, EPS (also referred to as Long Term Evolution, LTE, or 4G) standard specifications, the access nodes 11, 12 correspond typically to an Evolved NodeB (eNB) and the core network node 16 corresponds typically to either a Mobility Management Entity (MME) and/or a Serving Gateway (SGW). The eNB is part of the radio access network 15, which in this case is the E-UTRAN (Evolved Universal Terrestrial Radio Access Network), while the MME and SGW are both part of the EPC (Evolved Packet Core network).

For wireless communication systems pursuant to 3GPP 5G System, 5GS (also referred to as New Radio, NR, or 5G) standard specifications, the access nodes 11-12 correspond typically to a 5G NodeB (gNB) and the core network node 16 corresponds typically to either an Access and Mobility Management Function (AMF) and/or a User Plane Function (UPF). The gNB is part of the radio access network 15, which in this case is the NG-RAN (Next Generation Radio Access Network), while the AMF and UPF are both part of the 5G Core Network (5GC).

The 5G System consists of the access network and the core network. The Access Network (AN) is the network that allows the UE to gain connectivity to the Core Network (CN), e.g. the base station which could be a gNB or an ng-eNB in 5G. The CN contains all the Network Functions (NF) ensuring a wide range of different functionalities such as session management, connection management, charging, authentication, etc.

Communication systems, such as the wireless communication system 20 shown in **Figure 1,** operate using computerized networks and devices that execute complex software to control every aspect of their operation. Other types of computerized systems are similarly complex. In that regard, software testing plays a crucial role in software engineering for computerized systems. Software testing helps to ensure the reliability and quality of a software system which directly affects the quality of the end product and, ultimately, the quality of the experience of users of the computerized system. Software testing helps to ensure the quality of developed products, solutions and applications.

Software testing is both costly and time-consuming. In the context of communication networks, software testing involves designing and creating appropriate test cases that aim to verify and validate the operation of a computerized system or device. Each test case is designed to investigate a specific feature or function of a system or device. Because of the complexity of communication devices and systems, and the complexity of the software needed to operate them, many test cases may be needed to test a single device or system. Test case generation is considered to be one of the most difficult and time-consuming stages of the software testing life cycle (STLC). In fact, test case generation has been estimated to consume between 40% and 70% of the total SLTC effort.

Previously, one of the most common ways of generating test cases has been through manual labor. In a manual approach, a group of testers analyze and execute a set of test case specifications. Test case specification documents describe the functions of the software that are to be tested manually. The test case specification may describe functions of the communication system or device to be tested, along with test conditions and performance/evaluation criteria. By automating the generation of test cases, manual efforts can be reduced, which can lead to time and cost reductions. Some attempts have been made to automate the process of test case selection. For example, CN111176996A discloses a method that uses word segmentation processing on a target test case. However, the approach described therein does not support multiple languages, and is domain dependent.

US 2020/0019492 A1 relates to a mapping created between test steps from existing test cases and code snippets from existing automated test scripts.

SUMMARY

Test cases and test scripts are usually created using a manual process in which a test engineer reads a requirement specification and creates an appropriate test case or test script using their experience and judgment. This process is times consuming and can suffer from errors in judgment, uncertainty, and ambiguity. Moreover, creating a proper test case and test script for a given requirement specification requires significant knowledge and experience in the relevant domain. It may be difficult to adapt previous knowledge for testing a new product. Conventional approaches for automating test case and test script selection have met with limited success due to various challenges. For example, various approaches may lack the ability to analyze and parse requirement specifications that are not written in a formal language. Moreover, various approaches lack the ability to analyze requirement specifications that are written in different natural (human) languages, rather than the English language. Some approaches do not generate or select a proper executable test script but rather simply propose abstract guidelines for generating the test scripts manually. Finally, some approaches are highly domain-dependent, and cannot be readily applied to new or different domains.

It is therefore an object of the present invention to address one or more of the above problems.

The objectives of the present invention are achieved through the subject-matter of the independent claims 1 and 14, respectively claiming a method of testing a network node in a communication system (claim 1) and a system for testing a network node in a communication system (claim 14). Preferred embodiments are set out in the dependent claims.

A system/method as described herein may provide certain technical advantages, such as reducing manual work associated with software testing by automatically recommends the test case specifications with high accuracy as to the relevancy of the recommended scripts. Some embodiments may increase the adaptability and/or flexibility of the software testing process by selecting test scripts without requiring a formal requirement specification or the use of a particular human language (e.g., English) in the specification. Some embodiments can be easily deployed to new testing environments for new products/systems and may not be limited to particular domains.

BRIEF DESCRIPTION OF THE DRAWINGS

Figure 1 illustrates a simplified wireless communication system.

Figure 2 is a block diagram that illustrates elements of an AI-based Cognitive Test Generator according to some embodiments.

Figures 3, 4A and 4B are flowcharts of operations of systems/methods for automatically selecting test cases for testing communication systems/devices according to some embodiments.

Figures 4C and 4D illustrate data augmentation for generating feature vectors for training a classifier according to some embodiments.

Figure 4E is a flowchart that illustrates classification of feature vectors according to some embodiments.

Figure 5 illustrates a deployment environment for an AI-based Cognitive Test Generator according to some embodiments.

Figure 6 is a flowchart that illustrates multi-lingual feature extraction for an AI-based Cognitive Test Generator according to some embodiments.

Figures 7, 8A and 8B are flowcharts that illustrate operations of systems/methods according to some embodiments.

Figure 9 is a block diagram of a communication device that may be tested by systems/methods according to some embodiments.

Figure 10 is a block diagram of a communication device that may be tested by systems/methods according to some embodiments.

Figure 11 is a block diagram of a computing system for selecting test scripts for execution according to some embodiments.

DETAILED DESCRIPTION

Inventive concepts will now be described more fully hereinafter with reference to the accompanying drawings, in which examples of embodiments of inventive concepts are shown. Inventive concepts may, however, be embodied in many different forms and should not be construed as limited to the embodiments set forth herein. Rather, these embodiments are provided so that this disclosure will be thorough and complete, and will fully convey the scope of present inventive concepts to those skilled in the art. It should also be noted that these embodiments are not mutually exclusive. Components from one embodiment may be tacitly assumed to be present/used in another embodiment.

The following description presents various embodiments of the disclosed subject matter. These embodiments are presented as teaching examples and are not to be construed as limiting the scope of the disclosed subject matter. For example, certain details of the described embodiments may be modified, omitted, or expanded upon without departing from the scope of the described subject matter.

Embodiments described herein provide systems/methods for selecting test scripts for testing communication systems/devices using an automatic language processing technique, such as natural language processing (NLP), based on test specifications written in natural language as opposed to formalized test specifications. In particular, some embodiments apply artificial intelligence (AI) to automatically select/generate test scripts written in a high-level computer programming language, such as C# or JAVA, given only a test case specification written in a non-formal natural language, such as English. Some embodiments described herein may be implemented in the Python programming language as a system that reads test case specifications written in natural language provided by testers as input and provides the corresponding code for fulfilling the test specification.

As noted above, one of the major challenges of software testing, which is a cost and time-consuming process, is test automation. Software testing involves designing, creating, and executing appropriate test cases that aim to achieve verification and validation of a system under test. Usually for testing a software product a large number of test cases are created. Each test case needs to be tested and passed successfully. It is possible to expedite the process of software testing and also increase the testing coverage using automated testing. However, certain challenges need to be solved to effectively utilize test automation. Namely, test automation requires skilled resources and a high upfront investment cost. Test automation further requires selection of an appropriate testing tool and testing approach. Moreover, for test automation to be successful, there must be effective communication and collaboration among the testing team.

In a manual testing process, a large number of requirement and/or test case specifications may need to be created, analyzed, and executed manually by testers and test engineers in advance. Typically, a tester manually designs the requirement specification using applicable standards, his/her own knowledge, and possibly some predefined templates. Sometimes during the testing process, a new test case may need to be designed and replaced with another test case. Reading and analyzing the requirement and test specification files to design a new test case requires significant knowledge regarding the different levels of a testing process (design, implementation, and testing). Therefore, manual testing is a time and resource-consuming process which may also suffer from human imperfection and/or errors in judgment.

Typically, to generate test scripts for testing communication systems/devices, a test engineer reads a test specification or a requirements specification and manually generates program code, such as C# or JAVA code, that performs a test according to the test specification. This process is time consuming and might suffer from human judgment, uncertainty, and ambiguity. Moreover, it may be difficult to adapt prior knowledge for testing a new product. In this regard, test automation can be considered a good solution for decreasing manual work and increasing test accuracy.

Although test automation can be a time-consuming process, the use of Machine Learning (ML) and/or Artificial Intelligence (AI) technologies for test automation purposes may significantly reduce the human work required. If properly designed and implemented, such technologies may increase the quality and/or decrease the cost of the testing.

Some approaches for using AI/ML for test automation have been proposed. However the existing approaches may suffer from certain drawbacks. For example, such techniques may not consider requirement specifications that are written in a non-formal natural text in multiple languages, or required external open-source tools. Moreover, translating a requirement specification manually to a formal natural language is a time and effort-consuming process. Some AI/ML approaches may not provide executable code as output.

Some embodiments described herein provide an Artificial Intelligence Cognitive Test Generator (AICTG) which is a test automation tool that reads a requirement specification file that may be written in multiple languages as input and provides a corresponding executable test script (in C# or JAVA) as output. In some embodiments, the generated test cases and test scripts are not written in a formal natural language.

Systems/methods according to some embodiments may not use a predefined set of words, but rather may analyze the entire textual content of a requirement specification and generate one or more test case specifications from the requirement specification. Some embodiments use an automatic language processing technique, such as natural language processing (NLP), and syntactic analysis on pre-processed requirement specifications to extract an unordered list of keywords (features) that collectively explain/describe the test case in question.

To accomplish these goals, several AI/ML-based algorithms are employed within AICTG. The performance of AICTG has been evaluated on 600 requirement specifications and 1100 test cases. An empirical evaluation indicates a promising result using the AICTG in the Telecom domain. Furthermore, since the performance of the AICTG has been evaluated on 4G and 5G products, it can easily be applied to 6G products in the future.

Often, when testing communication systems/devices, an existing library of test scripts exists for testing prior versions of the systems/devices. That is, a test specification may describe test steps or test activities that can be mapped to existing test scripts from previous or similar products. Even if such a library is available, however, selecting an appropriate test script based on the test specification requires significant knowledge of the systems/devices being tested and of the library of test scripts. Moreover, it may be difficult to adapt such knowledge for testing a new product.

In the context of communication systems, the number of test cases that are needed to test products is very large. Automatically selecting/generating test scripts (in the form of C# or JAVA code) can lead to time and resource-savings.

Methods for automating the generation of test scripts typically require the use of formal test specifications. In such approaches, requirements specifications written in natural language must be translated into formal models that can be used for test case generation. In contrast, some embodiments described herein automatically select test cases based on test case specifications that are written in a natural language, such as English. Moreover, the selected test scripts may be capable of being executed directly without the need to write the code manually. Thus, some embodiments described herein may not require the use of code generation tools, such as QTP and SELENIUM.

Some embodiments described herein utilize an AI-based framework that can automate the testing process from scratch based on a set of test requirements. A system/method according to some embodiments may derive a corresponding test specification for each requirement. The system/method may generate corresponding executable test scripts in different formats, such as C# and JAVA for each test case.

Some embodiments described herein may apply a prior dynamic feedback adjustment matching score for recommended test specification to improve recommendation and/or a confidence score for the generated test script.

Some embodiments described herein may employ a supervised learning model or technique that provides precise information regarding the accuracy of the generated test scripts, allows a user to collect data or produce a data output from the previous experience, and/or helps the user to optimize performance criteria using experience.

A system/method according to some embodiments may be evaluated on 4G and 5G products, and may be applicable for new products, such as 6G. An empirical evaluation of a prototype system/method shows promising results, by reducing the time and human effort needed to generate test scripts from several hours to seconds.

Some embodiments described herein may provide an ability to analyze and parse requirement specifications that are not written in a formal language. Moreover, some embodiments may provide an ability to analyze requirement specifications that are written in multiple languages.

An AICTG system/method has two main phases, namely test case specification and test script generation.

The input to test case specification is a requirement specification that can be written in different languages, such as Spanish, Portuguese, English, etc. An AICTG system/method according to some embodiments, which may be implemented using a programming language such as Python, reads requirement specification files for testing network nodes as input and provides the corresponding test scripts as a final output according to a method that includes the following steps.

First, the method obtains a requirement specification of the network nodes. The requirement specification includes requirements described in natural language, without using formal structure and could be from a set of different languages like English, Spanish, Portuguese, and Swedish.

The method recommends a corresponding test case specification for each requirement, based on previous test cases developed for similar requirements.

The method then generates corresponding executable test scripts in different programming languages, such as C# and JAVA for each test case specification.

Finally, the method derives a confidence score for the generated test scripts based on a probability of requirement matching from prior data of requirements, test cases and feedback on false positives/negatives.

Some embodiments may enable the automatic driving of relevant test case specifications and test scripts of network nodes from non-formal requirement specifications files written in multiple languages.

The method is characterized by the use of semantic and syntactical similarity scored matching between new requirements and prior requirements, with supervised input (feedback) to prior such matching giving an adjustment matching score. The requirement specification and test case description are provided and derived in non-formal natural language descriptions in any of a set of languages. Executable test scripts are derived by a classifier that maps test case description to executable test script in different binary formats (e.g. C#, JAVA).

Some embodiments described herein may generate detailed test case specifications given non-formal requirement information. The embodiments may automatically recommend test case specifications, eliminating some of the irrelevant information and manual work associated with software testing. In some embodiments, no formal requirement specifications may be required. Moreover, some embodiments may be able to work with requirement information written in multiple different languages, such as Spanish, Portuguese, Swedish, Chinese, and English.

For each test case, some embodiments described herein may provide corresponding executable test scripts, which may be provided in different programming languages, such as C# and JAVA.

Some embodiments described herein may enable automation of the software testing procedure which may reduce the manual effort needed for generating test case specifications and test scripts.

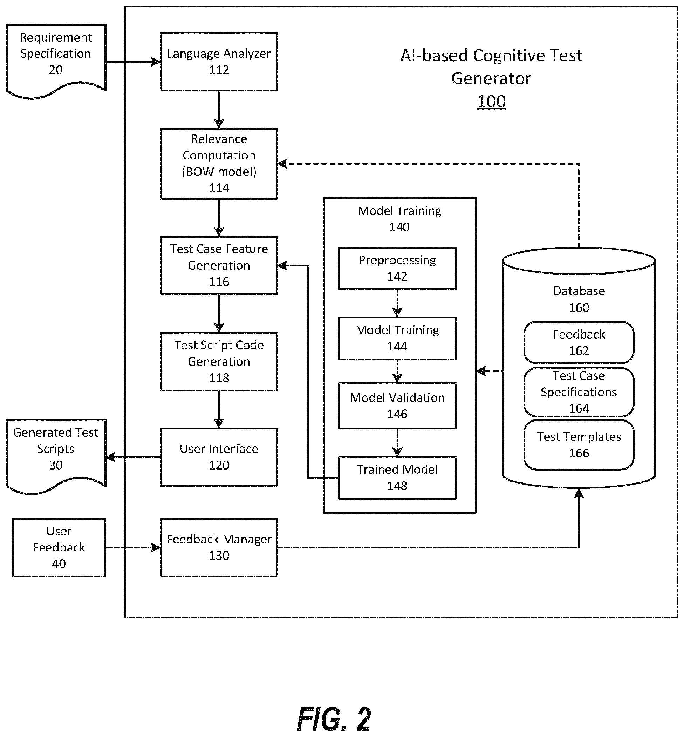

**Figure 2** illustrates aspects of a general AICTG system 100. As shown therein, a requirement specification 20 is input to the system 100. The requirement specification 20 may be written in non-formal language and may describe a test to be performed on a system, such as a communication system, in natural language. The output of the system 100 is a set of test scripts 30 that are generated/selected based on the input requirement specification 20.

The AICTG system 100 includes a language analyzer 112 that receives and analyzes the requirement specification 20. The analyzed specification is then processed using a relevance computation 114 that determines the relevance of terms in the specification using a bag-of-words model. The relevance computation 114 may select a formal test specification from a library of test case specifications 164 in a database 160 that most closely relates to the requirement specification 20. Test case feature generation 116 is then performed on the formal test specification using an AI model generated by a model training block 140. The features are then used to select one or more test scripts in a test script code generation module 118, which generates results that are output via a user interface 120 as generated test scripts 30. User feedback 40 is provided to a feedback manager 130, which stores the feedback 162 in the database 160 along with the library of test specifications 164 and a library of test templates 166. The test templates may be written in a high level programming language, such as C# or JAVA. The model training block 140 includes a preprocessing function 142, a model training function 144, and a model validation function 146 that generate a trained model 148.

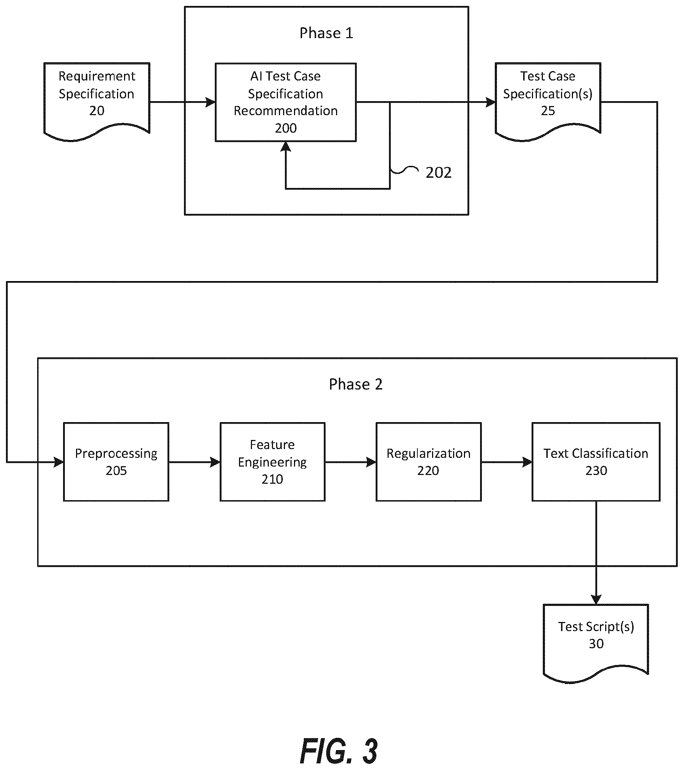

**Figure 3** illustrates a method performed by the AICTG system 100 in more detail. The process includes two principal phases, illustrated in **Figure 3** as Phase 1 and Phase 2. In Phase 1, the AICTG system 100 receives a requirement specification 20 as input. An AI test case specification recommendation module 200 analyzes the requirement specification 20 and selects/generates a test case specification 25 corresponding to the requirement specification 20. A test case specification 25 may be a more formal definition of a test to be performed. Although written in natural language, a test case specification may follow specific formatting requirements and have specific predetermined sections. For example, a case specification may contain sections that describe specific aspects of a test to be performed, such as Purpose, Configuration, Procedure, and Pass Criteria.

In Phase 2, the AICTG system 100 processes the test case specification 25 output by Phase 1, and selects/-generates one or more test scripts 30 that perform a test according to the specifications of the test case specification 25, which meet the requirements in the requirement specification 20. In Phase 2, the AICTG system 100 performs preprocessing on the test case specification 25. The AICTG system 100 then performs feature engineering 210 on the pre-processed test case specification, followed by regularization 220 of the results. Finally, text classification is performed to select/generate the test script(s) 30. These operations are described in more detail below.

Still referring to **Figure 3,** in Phase 1, a user inputs a requirement specification 20 into the AICTG system 100. To perform test specification recommendation, the input text is split into sentences, parsed, normalized, tokenized, and processed using anautomatic language processing technique, such as natural language processing (NLP), and techniques such as part-of-speech (POS) tagging, word vector measures, context-sensitive tensors, similarity after lemmatization and morphology, entity resolution, and synonym handling. The processing may be performed using, for example, Elasticsearch, which is a search and analytics engine for various types of data, including textual, numerical, geospatial, structured, and unstructured.

The system 100 computes relevancy scores for the input text relative to test case specifications stored in a database. The relevancy scores may be calculated, for example, using a bag of words (BOW) model and text semantic similarity metrics using cosine distance inside the Elasticsearch system. The relevance score may also take into account prior feedback 202 for similar searches and accordingly may boost or weigh down relevancy scores. Test specifications with the highest relevancy scores (e.g., the relevancy scores that exceed a predetermined threshold) are determined to be the corresponding test case(s) for the given requirement. These test case specifications are output by the Test Case Specification Recommendation module 200 as the test case specification 25.

The prior feedback method described above is based on an expectation that there may only be a few related queries for a given requirement specification, e.g. less than 30. When a query is made and one or more test specifications 25 are output by the system 100, the user can provide coarse feedback to the system 100 indicating whether each of the selected test specifications was relevant, neutral, or irrelevant. Such coarse feedback may be stored along with the query, and this stored information may be used as feedback data by the system 100. Relevancy scores are computed in a similar manner as above based on the prior feedback data. The final relevancy score is then adjusted positively or negatively for each test specification for relevant or irrelevant feedback, respectively. The scored feedback may then be aggregated.

The output from Phase 1 (which is a corresponding test specification) is employed as the input to Phase 2 to be used for generating corresponding test scripts. The relevancy score threshold for selecting the test specifications for Phase 2 may be user-configurable and may be based, for example on subject matter expert (SME) input. For example, in one implementation, a default threshold may be set at 0.3 (score >= 0.3). Dynamic feedback in Phase 1 can be used to help fine tune the generation/selection of test case specifications, which in turn may assist in generating relevant automated test scripts.

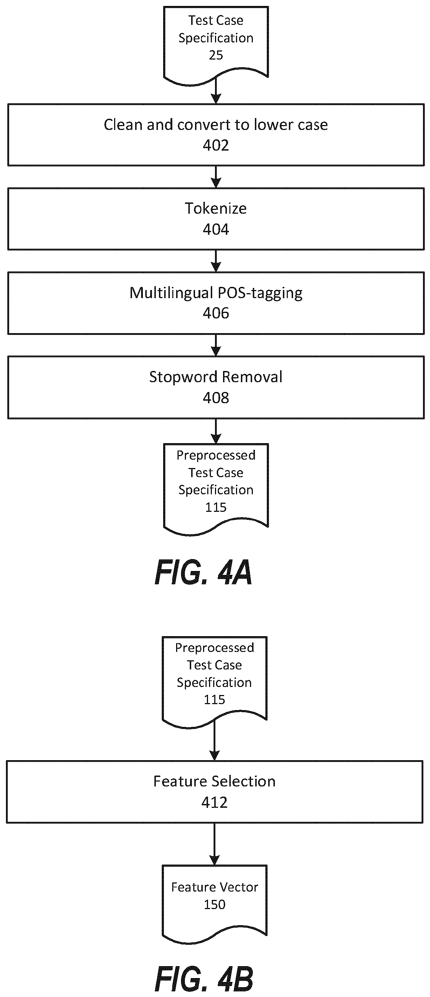

In Phase 2, test script generation is performed. First, the test case specification(s) 25 output at Phase 1 are preprocessed by a pre-processing module 205 to obtain cleaned test case specifications. Brief reference is made to **Figure 4A** which is a flowchart of systems/methods that receive the test case specification 25 and generate a preprocessed test case specification as output. The natural language toolkit (NLTK) Python programming library may be used to perform the preprocessing steps. As noted above, each test case specification may contain sections that describe aspects of the test, such as Purpose, Configuration, Procedure, and Pass Criteria. These sections contain important words that can act as features describing a test case specification.

Referring to **Figure 4A,** the process begins at block 402 by cleaning the text of each test case specification document by removing all punctuation and converting all words to lower case, because the Python NLTK is case sensitive. At block 404, the text of the test case specification is then divided into word tokens by splitting by white spaces using NLTK tokenization. At block 406, the word tokens are fed as input to a POS-tagger, such as the Stanford POS-tagger, which assigns a part of speech to each token. Finally, stop words, which are highfrequency words with low semantic content, such as 'the' or 'is', are removed to reduce/minimize the noise in the data at block 408. The output of the operations is a preprocessed test case specification.

After preprocessing, Phase 2 includes three principal operations shown in in **Figure 3,** namely feature engineering 210, regularization 220 and text classification 230. Each of these operations is described below in more detail.

Referring again to **Figure 3,** the pre-processed test case specifications output by the preprocessing module 205 are then processed by a feature engineering module 210. In particular, the preprocessed test case specifications output by Phase 1 are parsed and analyzed to extract features (in the form of feature vectors) that can be used to classify the test case specifications.

Brief reference is made to **Figure 4B,** which illustrates a feature selection 412 process which receives a preprocessed test case specification and generates a feature vector 150 as output. At block 412, the preprocessed test case specification is input. The preprocessed test case specification is analyzed using feature selection to generate a feature vector corresponding to the preprocessed test case specification. To derive a feature vector from a test case specification, a rule-based heuristic including a bag-of-words model may be used in some embodiments. It will be appreciated, however, that other feature selection algorithms could be employed.

In some embodiments, all verbs in a test case specification may be collected as features, because the verbs may provide important semantic cues regarding the test case described in the test case specification. Since the number of verbs in each specification might be low, only selecting verbs for inclusion in the feature vector may result in a short feature vector that may not be sufficiently descriptive of the test case specification. However, nouns and adjectives that appear infrequently in the test case specification may be irrelevant or misleading.

Accordingly, in some embodiments, only those nouns and adjectives that meet a selection criterion may be included in the feature vector. The selection criterion for nouns and adjectives may be based on the frequency of occurrence of such word tokens in the test case specification. In particular, the frequency of each word token may be calculated using a bag-of-words model, and for a noun or an adjective to be added to the feature vector, the token would have to appear at least a threshold number of times in the specification. In some cases, the threshold number may be two. Thus, only those nouns and verbs that occur at least twice in the test case specification may be included in the feature vector.

The output of the feature selection step 412 is a feature vector 150 associated with the test case specification 110. The feature vector 150 consists of a list of word tokens selected as features, e.g., ['time', 'calculate', 'voltage', ... , 'power', 'attenuation'].

Referring again to **Figure 3,** at block 220, a regularization operation is performed using data augmentation. The regularization process can help reduce the risk of overfitting the training set. Moreover, regularization may increase the size and variety of the training data set by adding slightly modified copies of already existing data or newly created synthetic data from existing data. The data augmentation embedded in AICTG is done by choosing elements from the power set, that is the set of all subsets, of a feature vector. Not all subsets may be selected and added to the training data. For example, subsets containing only one word may be excluded.

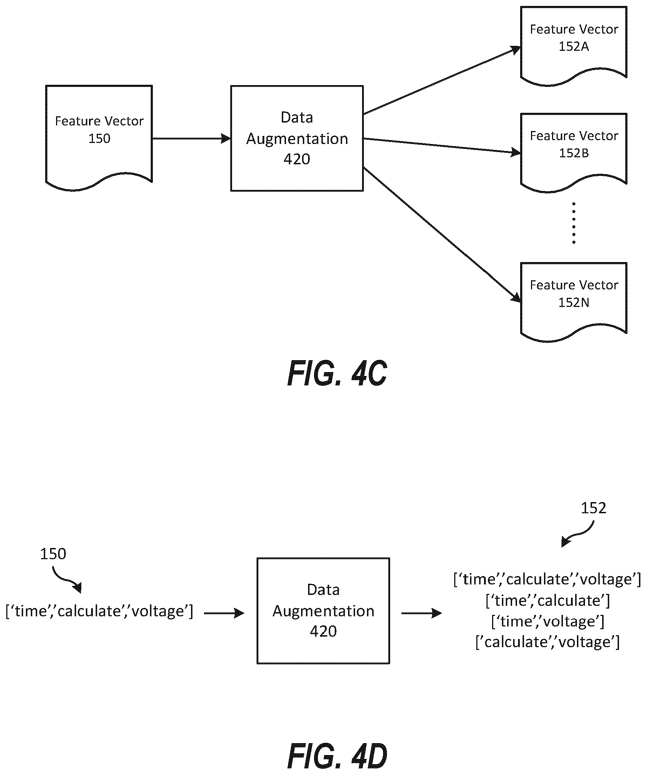

The regularization process is illustrated in more detail in **Figures 4C** and **4D,** to which brief reference is made. Referring to **Figure 4C,** data augmentation 420 may be performed by choosing elements from the power set of the feature vector 150, namely, the set of all subsets of the feature vector. Not all subsets may be selected and added to the training dataset. For example, in some embodiments, subsets containing only one word may be excluded. The newly generated feature vectors 152A-152N are labeled with the same label as the vector they were generated from (i.e., the feature vectors 152 are mapped to the same labels as the feature vector 150 was).

**Figure 4D** illustrates an example of data augmentation in which the feature vector 150 (['time','calculate','voltage']) derived from a test case specification is expanded into a set of feature vectors 152 (['time','calculate','voltage'], ['time','calculate'], etc.). In this way, multiple new feature vectors are generated from an existing feature vector.

Referring again to **Figure 3,** a text classification 230 step is performed to generate/select one or more test scripts based on the generated feature vector. In particular, after performing regularization on the training set, the data may be encoded using one-hot-encoding to keep track of the labels in a numerically meaningful way. Each feature and label in the data set may be converted to either a 1 or 0 depending on whether they belong to the test case specification or not. Each feature vector is later mapped to a label vector containing the C# or JAVA code scripts corresponding to the test case specification that is represented by that feature vector.

The mapping may be performed in one of two ways. In a first method, the feature vector is mapped to an entire test script code, while in a second approach, the feature vector may be mapped to specific lines of code in the test scripts for testing specific features.

As an example of the second approach, assume the feature 'temp', is generated from a test case specification. The feature 'temp' can be mapped to all existing corresponding code for testing it. For this purpose, the system has access to labeled data generated by SMEs that indicate all possible ways for making a test script for the temperature ('temp').

However, based on the obtained results from the regularization operation 220, it can be determined whether the 'temp' feature should be tested separately or whether the system needs to test another feature, such as 'voltage' as well.

For classification, two arrays are constructed, namely, a Features[] array and a Labels[] array, where Features[i] contains the feature vector belonging to the i:th test case specification and Labels[i] contains the label vector belonging to the i:th test case specification. The Features[] array is used as input for the text classifier and the Labels[] array is the output. In the text classification step, the feature and label vectors, obtained in the previous step, are fed to the text classifier as input and output respectively for training. The newly generated feature vectors were labeled with the same label as the vector they were generated from.

Since each of the test case specifications can be mapped to several test scripts, i.e. labels, a classification model that can handle multi-label classification needed to be applied for solving the problem. For this purpose, we used the One-Vs-All (OVA) strategy, where the multi-label classification problem is decomposed to multiple single-label classification problems. By using the OVA strategy, several independent classifiers were built for each of the labels (test scripts) in the data. Each of the classifiers is later fitted to each input in the data set to determine which labels it belongs to. Two classifiers were applied to the vectors: LinearSVC and K nearest neighbors (KNN). For LinearSVC, the regularization parameter C was set to 0.6. For KNN, two different values of K were used, 1 and 3, and the Sørensen-Dice distance function is used.

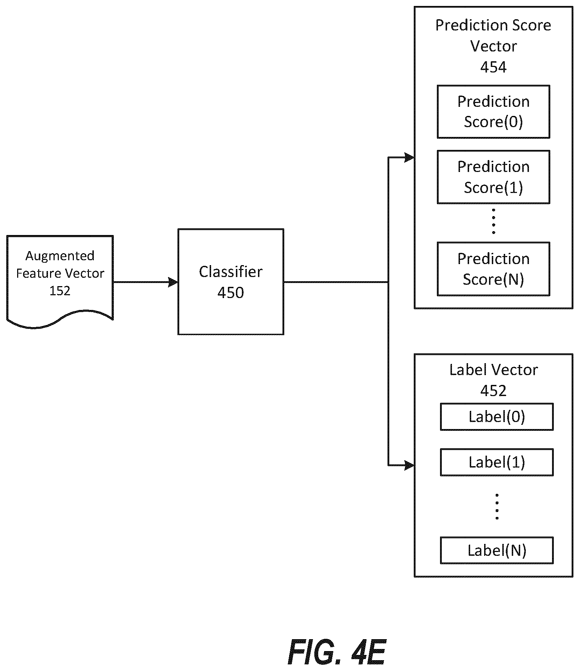

Brief reference is made to **Figure 4E,** in which the process of classification is illustrated in more detail. The classification is performed by a classifier 450, which may implement a classification algorithm such as KNN, Linear SVC, or any other suitable classification algorithm.

As shown in **Figure 4E,** the feature vector 150 is input to a classifier 450 that performs multi-label classification of the feature vector 150 relative to elements of a label vector 452 using a one-versus-all (OVA) strategy, where each element of the label vector 452 corresponds to an available test script in the library of test scripts 30.

In some embodiments, the label vector 452 consists of the names of each test script that are relevant for the test case specification in question, because the names are unique and may be readily used as identifiers to identify the test scripts. However, in some embodiments, other identifiers may be used to identify the test scripts. For example, the label vector elements could include keywords from the test scripts, a summary from the test script, numbers that have been assigned to each script beforehand, or even the entire test script.

Accordingly, in the classification operation, the feature vector 150 is mapped to N elements of the label vector 452 in a multi-label classification operation. To perform the multi-label classification, a One-Vs-All (OVA) classification strategy is used, where the multi-label classification problem is decomposed to multiple single-label classification problems. By using the OVA strategy, several independent classifiers are built for each element of the label vector 452 (i.e., each of the test scripts). Each of the classifiers is fitted to each input in the data set to determine which labels it belongs to. The output of the classifier 450 is a vector 452 of N labels and a vector 454 of N prediction score values that indicate how relevant the associated test script is to the test case specification represented by the feature vector 150. In general, values of the prediction score above zero indicate a high degree of relevance. Thus, in some embodiments, test scripts corresponding to label vectors having a prediction score greater than zero may be selected for execution. The classifier 450 may identify none, one, or more than one of the test scripts as being relevant to the test case specification represented by the feature vector 150.

In some embodiments, a threshold value for the prediction score greater than zero may be used for determining what test cases to select. That is, by choosing a threshold for the prediction score that is greater than zero, there may be higher confidence that the model only selects test scripts that are highly relevant to the test case specification represented by the feature vector 150, thus potentially increasing confidence in the predictions. To choose the threshold, the prediction scores may be analyzed and a grid search with different values for the threshold implemented. In some implementations, a threshold value of 0.1 may yield the best results. A threshold value of the prediction score of 0.1 means that the classifier only selects the test scripts that have a prediction score over 0.1.

For each selected test script, some embodiments provide a confidence score, expressed as a percentage, that indicates how confident the system is that the selected test script is relevant to the given test case specification. The confidence score percentage may be calculated based on the prediction score and the threshold value described above. In some embodiments, all test scripts with a prediction score equal to or greater than the threshold value of 0.1 are considered to have a 100% confidence score. For the test scripts with a prediction score lower than the threshold value of 0.1, a confidence score may be calculated based on how close the scripts' prediction score is to the threshold in a normal distribution fashion.

To calculate the confidence score given the predication score, the following steps are performed. First, the standard deviation, $\sigma$, of the prediction scores of all test scripts in the data set is calculated. Next, the mean, $\mu$, is set as the threshold value of 0.1. A normally distributed random variable is then generated by using the mean and standard deviation as parameters. A confidence score is then calculated as shown in Equation [1]:

$$CS(PS) = \begin{cases} 1, & PS \geq threshold \\ 2 * cdf(PS; \mu, \sigma), & PS < theshold \end{cases} \qquad [1]$$

where CS is the confidence score, PS is the prediction score and cdf is the cumulative distribution function of the normally distributed random variable.

Once the prediction scores have been generated and the test scripts meeting or exceeding the prediction score threshold have been selected, some systems/methods may output an identification of the selected test scripts along with their associated confidence scores to a user via a user interface. In some embodiments, the selected test scripts may be automatically executed by the system to carry out a test according to the test case specification.

In summary, an AICTG system/method 100 according to some embodiments may be able to recommend a corresponding test case specification and test script for a given test requirement. The systems/methods may generate/select a test script for a new design requirement specification that is not in the training set. Therefore, the confidence score for those test requirements and test cases that the system has already evaluated may be higher for the newly created requirements and test specifications. However, in both scenarios the manual human work required may be decreased significantly.

The AICTG system 100 may be implemented in Python or any other suitable programming environment. The requirement specification document can be written in multiple languages. The output of the AICTG system 100 consists of recommended test scripts that are relevant for the requirement specification in question. The scripts may be written, for example, as C# or JAVA test scripts. These test scripts contain the code that should be run to execute the test case described in the selected requirement specification.

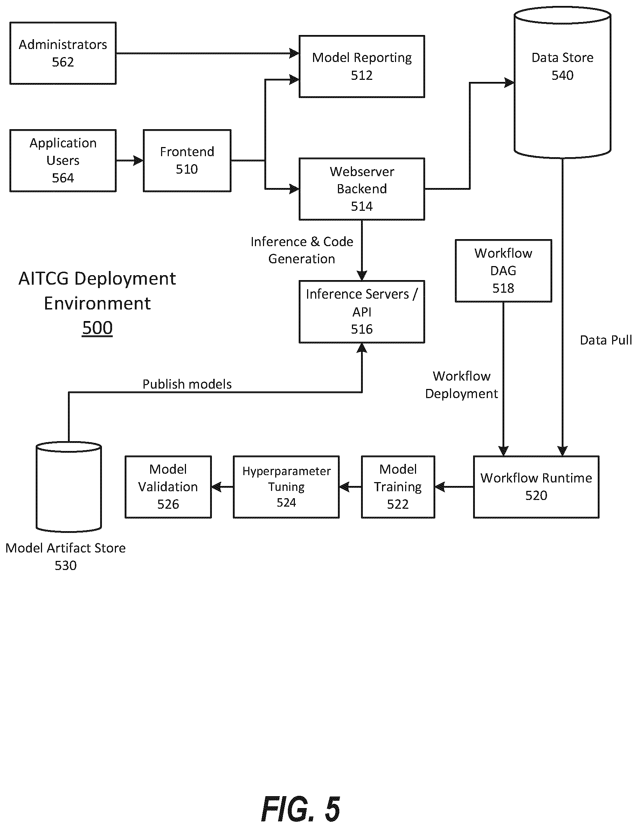

An example of an environment 500 for deploying the AICTG system 100 is illustrated in **Figure 5.** The deployment includes a frontend 510 that is accessed by application users 564. The frontend 510 includes a user interface that allows users 564 to interact with the AICTG system 100, and is typically built with a responsive web design or as a progressive web application.

The environment 500 includes a webserver backend 514 which provides the application programming interfaces (APIs) needed for search/upload/feedback and any other concerns of the application. The webserver backend 514 is typically implemented with asynchronous non-blocking I/O.

The environment 500 further includes a workflow directed acrylic graph (DAG) 518 for implementing training and inference workflows needed for the model that provides a workflow deployment to a workflow runtime instance 520. A datastore 540 provides runtime 520 with access to necessary databases. The workflow runtime 520 is an execution environment for running the training and inference workflows.

Workflow tasks include model training (522), hyperparameter tuning (524) and model validation 526) for training/tuning/validating the model for optimal performance.

A set of inference API Servers 516 are provided for hosting inference APIs using the trained model.

Finally, one or more model reporting servers 512 are provided for the administrators 562 of the system to periodically review model performance and capture metrics.

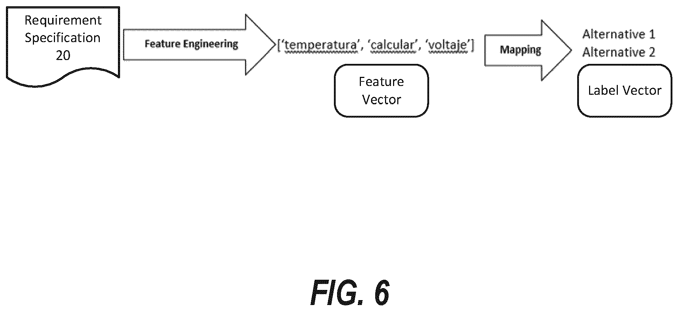

As noted above, an AICTG system 100 according to some embodiments may be independent from any language by employing the multi-lingual Elasticsearch capability and Stanford Log-linear Part-Of-Speech Tagger. The embedded trained language identification model in Elasticsearch can help users to determine the language of the text. The language identification takes into account Unicode boundaries when the feature set is built. If the text has diacritical marks, then the model uses that information for identifying the language of the text. In certain cases, the model can detect the source language even if it is not written in the script that the language traditionally uses. These languages are marked in the supported languages table with the Latn subtag. Language identification supports Unicode input. **Figure 6** shows an example for feature generation in Spanish language. in which the feature vector generated from the requirement specification includes Spanish language terms.

For performance measurement, Precision, Recall, and F1 scores may be calculated and used to measure the performance of the system. These metrics put more weight on the true positive predictions which may be considered to be of most importance. The Precision score, which is calculated as shown in Equation [2] below, denotes the number of correctly generated test scripts divided by the total number of the test script generated by the AICTG system 100. This indicates how many of the selected items are relevant. The Recall score, calculated as shown in Equation [3] below, is the number of correctly generated test scripts divided by the total number of the existing test scripts. This indicates how many of the relevant items are selected. The F1-score, calculated as shown in Equation [4], is a harmonic mean between Precision and Recall which measures a model's accuracy on a dataset.

$$Precision = \frac{True\ Positive}{True\ Positive + False\ Positive} \qquad [2]$$

$$Recall = \frac{True\ Positive}{True\ Positive + False\ Negative} \qquad [3]$$

$$F1 = 2\ \frac{Precision \cdot Recall}{Precision + Recall} \qquad [4]$$

Employing these equations can help to evaluate the performance of the AICTG system 100. In an example embodiments, the system 100 was trained or a corpus of 600 requirements and 1100 test cases. In this regard, different threshold boundaries are analyzed where, the highest value for F1 score= 83.80% is obtained for the threshold is set to 0.1, where the precision score is: 84.62% and the recall score is: 85.26%, respectively. Moreover, the balanced accuracy which is measured as the average of the proportion corrects of each class individually is equal to 92% in this case.

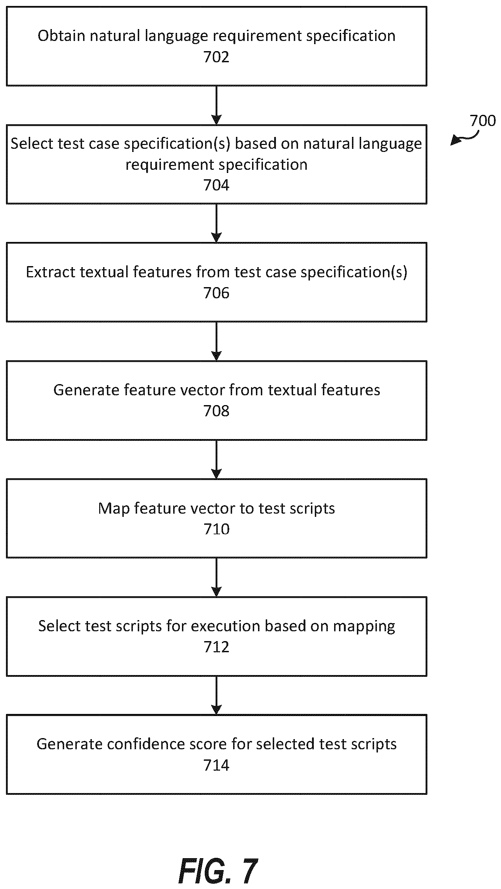

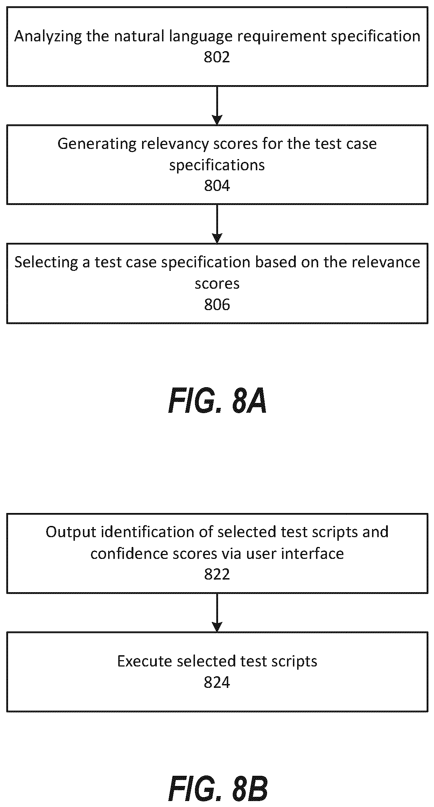

**Figures 7, 8A and 8B** illustrate operations of an AICTG system/method 100 according to some embodiments.

Referring to **Figures 2, 3 and 7,** a method of testing an element in a computerized system according to some embodiments is illustrated. The method includes obtaining (block 702) a natural language requirement specification 20 that describes a testing requirement associated with the network node, and selecting (block 704) a test case specification 25 from a library 164 of test case specifications based on the natural language requirement specification. The method includes extracting (block 706) textual features from the test case specification 25, generating (block 708) a feature vector 150 (**Figure 4C**) comprising the extracted textual features from the test case specification 25, and mapping (block 710) the feature vector 150 to a plurality of available test scripts 30. One or more of the plurality of available test scripts 30 are selected (block 712) for execution in response to the mapping of the feature vector 150, and for one or more of the selected test scripts, a confidence score is generated (block 714) that measures a confidence of an association of the test case specification with the selected test script.

Referring to **Figure 8A,** selecting the test case specification may include analyzing (block 802) the natural language requirement specification using natural language processing. For a plurality of test case specifications in the library 164 of test case specifications, a relevancy score is generated (block 804) that represents a relevance of the natural language requirement specification to the test case specification 25, and the test case specification 25 is selected (block 806) based on the associated relevancy score.

Referring to **Figure 8B,** the method may further include outputting (block 822) an identification of the selected test scripts 30 and associated confidence scores via a user interface, and executing (block 824) the selected test scripts.

In some embodiments, selecting the test case specification 25 based on the associated relevancy score comprises selecting the test case specification 25 based on the associated relevancy score in response to the relevancy score being higher than a predetermined threshold.

In some embodiments, selecting the test case specification 25 based on the associated relevancy score comprises selecting a test case specification 25 from the plurality of test case specifications that has a highest relevancy score.

In some embodiments, analyzing the natural language requirement specification 20 using natural language processing comprises performing part of speech tagging on the natural language requirement specification 20 to identify key terms in the natural language requirement specification.

The method may further include receiving user feedback associated with a training test case specification in the library 164 of test case specifications, wherein the relevancy score associated with the training test case specification is based on the user feedback.

The user feedback may include an indication of whether the training test case specification was relevant, neutral, or irrelevant relative to a previously analyzed requirement specification.

The relevancy scores may be generated using a text semantic similarity metric that uses cosine distance scores relative to the natural language requirement specification and the plurality of test case specifications 25 in the library 164 of test case specifications.

In some embodiments, the test case specifications 25 may be written in different languages.

In some embodiments, extracting the textual features from the test case specification 25 includes splitting the test case specification into a set of specification words, performing part of speech tagging on the words in the set of specification words, and removing stop words from the set of specification words.

Generating the feature vector 150 may include selecting all verbs from the set of specification words, and selecting all nouns and adjectives from the set of specification words that satisfy a selection criterion that may include a frequency of appearance within the set of specification words.

The method may further include generating a plurality of augmented feature vectors 152 (**Figure 4D**) from the feature vector 150, wherein the plurality of augmented feature vectors 152 are generated as subsets of the feature vector, and training a classifier 450 (**Figure 4E**) that is used to map the feature vector 150 to the plurality of available test scripts 25 using the plurality of augmented feature vectors.

Mapping the feature vector 150 to plurality of available test scripts may include generating a label vector 452 (**Figure 4E**) for each of the plurality of available test scripts, and classifying the label vector using a text classifier. Generating the label vector 452 for each of the plurality of available test scripts may include generating, for each test script in the plurality of available test scripts, a vector of terms in the test script.

In some embodiments, the label vector 452 may be classified using a one-vs-all classification strategy.

The method may further include generating a prediction score associated with each of the plurality of available test scripts 25, wherein selecting one or more of the plurality of available test scripts for execution in response to the mapping of the feature vector is performed based on the prediction score.

In some embodiments, selection of the one or more of the plurality of available test scripts 30 for execution in response to the mapping of the feature vector 150 may be performed based on whether an associated prediction score is greater than a threshold value.

The confidence score for each of the selected test scripts may be generated based on the prediction score associated with each of the selected test scripts.

The method may further include receiving a user input in response to outputting the identification of the selected test scripts, and executing the selected test scripts in response to the user inputs.

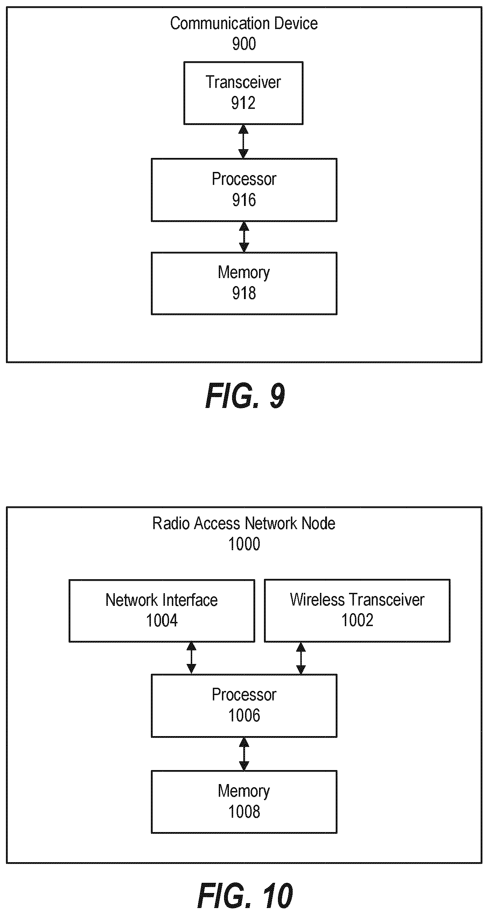

**Figure 9** depicts an example of a communication device 900 of a wireless communication network that may be tested according to embodiments of inventive concepts. As shown, the communication device 900 may include a transceiver circuit 912 (also referred to as a transceiver) including a transmitter and a receiver configured to provide uplink and downlink radio communications with wireless devices. The communication device 900 may also include a processor circuit 916 (also referred to as a processor) coupled to the transceiver circuit 912, and a memory circuit 918 (also referred to as memory) coupled to the processor circuit 916. The memory circuit 918 may include computer readable program code that when executed by the processor circuit 916 causes the processor circuit to perform various operations. According to other embodiments, processor circuit 916 may be defined to include memory so that a separate memory circuit is not required.

**Figure 10** depicts an example of a radio access network node 1000 of a wireless communication network that may be tested according to embodiments of inventive concepts. The network node 1000 may include a network interface circuit 1004 (also referred to as a network interface) configured to provide communications with other nodes (e.g., with other base stations and/or core network nodes) of the wireless communication network. The network node 1000 may further include a wireless transceiver 1002 for performing wireless communications with a communication device 900. The memory circuit 1008 may include computer readable program code that when executed by the processor circuit 1006 causes the processor circuit to perform various operations. According to other embodiments, processor circuit 1006 may be defined to include memory so that a separate memory circuit is not required.

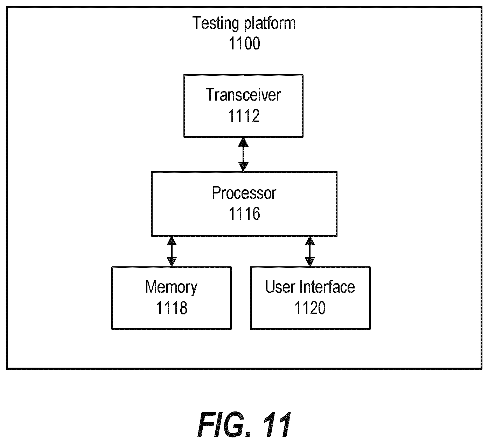

**Figure 11** depicts an example of a testing system 1100 that may select test scripts for execution according to embodiments of inventive concepts. As shown, the testing platform 1100 may include a transceiver circuit 1112 (also referred to as a transceiver) including a transmitter and a receiver configured to provide uplink and downlink communications with communication devices. The testing platform 1100 may also include a processor circuit 1116 (also referred to as a processor) coupled to the transceiver circuit 1112, and a memory circuit 1118 (also referred to as memory) coupled to the processor circuit 1116. The memory circuit 1118 may include computer readable program code that when executed by the processor circuit 1116 causes the processor circuit to perform operations according to embodiments disclosed herein. According to other embodiments, processor circuit 1116 may be defined to include memory so that a separate memory circuit is not required.

As discussed herein, operations of the testing platform 1100 may be performed by processor 1116. Moreover, modules may be stored in memory 1118, and these modules may provide instructions so that when instructions of a module are executed by processor 1116, processor 1116 performs respective operations (e.g., operations discussed above with respect to example embodiments).

Accordingly, a testing platform 1100 according to some embodiments includes a processor circuit 1116, a transceiver 1112 coupled to the processor circuit, and a memory 1118 coupled to the processor circuit, the memory including machine readable program instructions that, when executed by the processor circuit, can use the testing platform 1100 to perform operations described above.

Referring to **Figures 7 and 11,** a system (1100) for testing a network node in a communication system includes a processor circuit (1116), and a memory (1118) coupled to the processor circuit. The memory includes computer program instructions that, when executed by the processor circuit cause the system to perform operations including obtaining (702) a natural language requirement specification that describes a testing requirement associated with the network node, selecting (704) a test case specification from a library of test case specifications based on the natural language requirement specification, extracting (706) textual features from the test case specification, generating (708) a feature vector comprising the extracted textual features from the test case specification, mapping (710) the feature vector to a plurality of available test scripts, selecting (712) one or more of the plurality of available test scripts for execution in response to the mapping of the feature vector, and for one or more of the selected test scripts, generating (714) a confidence score that measures a confidence of an association of the test case specification with the selected test script.

Explanation of Abbreviations

| | |
|---|---|
| AI | Artificial Intelligence |
| BOW | Bag of Words |
| GUI | Graphical User Interface |
| KNN | K-Nearest Neighbors |
| LinearSVC | Linear Support Vector Classifier |
| ML | Machine Learning |
| NLP | Natural Language Processing |
| NLTK | Natural Language Toolkit |
| OVA | One-Vs-All |
| POS | Part-of-Speech |
| SME | Subject-Matter Expert |
| STLC | Software Testing Life Cycle |

Further definitions and embodiments are discussed below.

In the above-description of various embodiments of present inventive concepts, it is to be understood that the terminology used herein is for the purpose of describing particular embodiments only and is not intended to be limiting of present inventive concepts. Unless otherwise defined, all terms (including technical and scientific terms) used herein have the same meaning as commonly understood by one of ordinary skill in the art to which present inventive concepts belong. It will be further understood that terms, such as those defined in commonly used dictionaries, should be interpreted as having a meaning that is consistent with their meaning in the context of this specification and the relevant art and will not be interpreted in an idealized or overly formal sense unless expressly so defined herein.

As used herein, a "communication device" may be any device intended for accessing services via an access network and configured to communicate over the access network. For instance, the communication device may be, but is not limited to: a user equipment (UE), mobile phone, smart phone, sensor device, meter, vehicle, household appliance, medical appliance, media player, camera, or any type of consumer electronic, for instance, but not limited to, television, radio, lighting arrangement, tablet computer, laptop, or PC. The communication device may be a portable, pocketstorable, hand-held, computer-comprised, or vehicle-mounted mobile device, enabled to communicate voice and/or data, via a wireless or wireline connection.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" includes any and all combinations of one or more of the associated listed items.

It will be understood that although the terms first, second, third, etc. may be used herein to describe various elements/operations, these elements/operations should not be limited by these terms. These terms are only used to distinguish one element/operation from another element/operation. Thus, a first element/operation in some embodiments could be termed a second element/operation in other embodiments without departing from the teachings of present inventive concepts. The same reference numerals or the same reference designators denote the same or similar elements throughout the specification.

As used herein, the terms "comprise", "comprising", "comprises", "include", "including", "includes", "have", "has", "having", or variants thereof are open-ended, and include one or more stated features, integers, elements, steps, components, or functions but does not preclude the presence or addition of one or more other features, integers, elements, steps, components, functions, or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present inventive concepts may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

**Claims**

1. A method of testing a network node in a communication system, comprising:

   obtaining (702) a natural language requirement specification that describes a testing requirement associated with the network node;
   selecting (704) one or more test case specifications from a library of test case specifications based on the natural language requirement specification, wherein the one or more test case specifications comprise unstructured input format;
   extracting (706) textual features from the one or more test case specifications;
   generating (708) a feature vector comprising the extracted textual features from the one or more test case specifications;
   mapping (710) the feature vector to a plurality of available test scripts;
   selecting (712) one or more of the plurality of available test scripts for execution in response to the mapping of the feature vector; and
   for one or more of the selected test scripts, generating (714) a confidence score that measures a confidence of an association of the test case specification with the selected test script.

2. The method of Claim 1, wherein selecting the one or more test case specification comprises:

   analyzing (802) the natural language requirement specification using an automatic language processing technique; and
   for a plurality of test case specifications in the library of test case specifications, generating (804) a relevancy score that represents a relevance of the natural language requirement specification to the test case specification; and
   selecting (806) the test case specification based on the associated relevancy score.

3. The method of Claim 2, wherein selecting the one or more test case specifications based on the associated relevancy score comprises at least one of:

   selecting the one or more test case specifications based on the associated relevancy score in response to the relevancy score being higher than a predetermined threshold; and
   selecting a test case specification from the plurality of test case specifications that has a highest relevancy score.

4. The method of any of Claims 2 to 3, wherein analyzing the natural language requirement specification using automatic language processing comprises identifying key terms in the natural language requirement specification.

5. The method of any of Claims 2 to 4, further comprising:

   obtaining user feedback associated with a training test case specification in the library of test case specifications; wherein the relevancy score associated with the training test case specification is based on the user feedback, optionally wherein the user feedback comprises an indication of whether the training test case specification was relevant, neutral, or irrelevant.

6. The method of any of Claims 2 to 5, wherein the relevancy scores are generated using a text semantic similarity metric relative to the natural language requirement specification and the plurality of test case specifications in the library of test case specifications.

7. The method of any previous Claim, wherein the test case specifications and/or the requirement specifications are written in different human languages.

8. The method of any previous Claim, wherein extracting the textual features from the test case specification comprises:

   splitting the test case specification into a set of specification words;
   performing part of speech tagging on the words in the set of specification words; and
   removing stop words from the set of specification words.

9. The method of Claim 8, wherein generating the feature vector comprises:

   selecting all verbs from the set of specification words; and
   selecting all nouns and adjectives from the set of specification words that satisfy a selection criterion, optionally wherein the selection criterion comprises a frequency of appearance within the set of specification words.

10. The method of Claim 9, further comprising:

    generating a plurality of augmented feature vectors from the feature vector, wherein the plurality of augmented feature vectors are generated as subsets of the feature vector; and
    training a classifier that is used to map the feature vector to the plurality of available test scripts using the plurality of augmented feature vectors.

11. The method of any previous Claim, wherein mapping the feature vector to plurality of available test scripts comprises:

    generating a label vector for each of the plurality of available test scripts; and
    classifying the label vector using a text classifier, optionally wherein generating the label vector for each of the plurality of available test scripts comprises generating, for each test script in the plurality of available test scripts, a vector of terms in the test script, optionally wherein classifying the label vector is performed using a one-vs-all classification strategy.

12. The method of any previous Claim, further comprising:
    generating a prediction score associated with each of the plurality of available test scripts, wherein selecting one or more of the plurality of available test scripts for execution in response to the mapping of the feature vector is performed based on the prediction score, optionally wherein selection of the one or more of the plurality of available test scripts for execution in response to the mapping of the feature vector is performed based on whether an associated prediction score is greater than a threshold value, further optionally wherein the confidence score for each of the selected test scripts is generated based on the prediction score associated with each of the selected test scripts.

13. The method of any previous Claim, further comprising:

    outputting (822) an identification of the selected test scripts and associated confidence scores via a user interface; and
    executing (824) the selected test scripts, and
    further optionally comprising:

receiving a user input in response to outputting the identification of the selected test scripts; and
executing the selected test scripts in response to the user inputs.

14. A system (1100) for testing a network node in a communication system, wherein the system is configured to:

obtaining (702) a natural language requirement specification that describes a testing requirement associated with the network node;
selecting (704) one or more test case specifications from a library of test case specifications based on the natural language requirement specification, wherein the one or more test case specifications comprise unstructured input format;
extracting (706) textual features from the one or more test case specifications;
generating (708) a feature vector comprising the extracted textual features from the one or more test case specifications;
mapping (710) the feature vector to a plurality of available test scripts;
selecting (712) one or more of the plurality of available test scripts for execution in response to the mapping of the feature vector; and
for one or more of the selected test scripts, generating (714) a confidence score that measures a confidence of an association of the test case specification with the selected test script.

**Patentansprüche**

1. Verfahren zum Testen eines Netzwerkknotens in einem Kommunikationssystem, umfassend:

Erhalten (702) einer Anforderungsspezifikation in natürlicher Sprache, die eine mit dem Netzwerkknoten assoziierte Testanforderung beschreibt;
Auswählen (704) einer oder mehrerer Testfallspezifikationen aus einer Bibliothek von Testfallspezifikationen basierend auf der Anforderungsspezifikation in natürlicher Sprache, wobei die eine oder die mehreren Testfallspezifikationen ein unstrukturiertes Eingabeformat umfassen;
Extrahieren (706) von Textmerkmalen aus der einen oder den mehreren Testfallspezifikationen;
Erzeugen (708) eines Merkmalsvektors, der die extrahierten Textmerkmale aus der einen oder den mehreren Testfallspezifikationen umfasst;
Zuordnen (710) des Merkmalsvektors zu einer Mehrzahl verfügbarer Testskripts;
Auswählen (712) eines oder mehrerer der Mehrzahl verfügbarer Testskripts zur Ausführung in Reaktion auf das Zuordnen des Merkmalsvektors; und
für eines oder mehrere der ausgewählten Testskripts Erzeugen (714) eines Konfidenzwerts, der eine Konfidenz einer Assoziation der Testfallspezifikation mit dem ausgewählten Testskript misst.

2. Verfahren nach Anspruch 1, wobei das Auswählen der einen oder der mehreren Testfallspezifikationen Folgendes umfasst:

Analysieren (802) der Anforderungsspezifikation in natürlicher Sprache unter Verwendung einer automatischen Sprachverarbeitungstechnik; und
für eine Mehrzahl von Testfallspezifikationen in der Bibliothek von Testfallspezifikationen Erzeugen (804) eines Relevanzwerts, der eine Relevanz der Anforderungsspezifikation in natürlicher Sprache für die Testfallspezifikation darstellt; und
Auswählen (806) der Testfallspezifikation basierend auf dem assoziierten Relevanzwert.

3. Verfahren nach Anspruch 2, wobei das Auswählen der einen oder der mehreren Testfallspezifikationen basierend auf dem assoziierten Relevanzwert mindestens eines von Folgendem umfasst:

Auswählen der einen oder der mehreren Testfallspezifikationen basierend auf dem assoziierten Relevanzwert in Reaktion darauf, dass der Relevanzwert höher als ein vorbestimmter Schwellenwert ist; und
Auswählen einer Testfallspezifikation aus der Mehrzahl von Testfallspezifikationen, die einen höchsten Relevanzwert aufweist.

4. Verfahren nach einem der Ansprüche 2 bis 3, wobei das Analysieren der Anforderungsspezifikation in natürlicher Sprache unter Verwendung der automatischen Sprachverarbeitungstechnik Identifizieren von Schlüsselbegriffen in der Anforderungsspezifikation in natürlicher Sprache umfasst.

5. Verfahren nach einem der Ansprüche 2 bis 4, ferner umfassend:

Erhalten einer Benutzerrückmeldung, die mit einer Trainingstestfallspezifikation in der Bibliothek von Testfallspezifikationen assoziiert ist;
wobei der mit der Trainingstestfallspezifikation assoziierte Relevanzwert auf der Benutzerrückmeldung basiert, wobei optional die Benutzerrückmeldung eine Angabe dessen umfasst, ob die Trainingstestfallspezifikation relevant, neutral oder irrelevant war.

6. Verfahren nach einem der Ansprüche 2 bis 5, wobei die Relevanzwerte unter Verwendung einer Metrik semantischer Textähnlichkeit relativ zu der Anforderungsspezifikation in natürlicher Sprache und der Mehrzahl von Testfallspezifikationen in der Bibliothek von Testfallspezifikationen erzeugt werden.

7. Verfahren nach einem der vorhergehenden Ansprüche, wobei die Testfallspezifikationen und/oder die Anforderungsspezifikationen in unterschiedlichen menschlichen Sprachen geschrieben sind.

8. Verfahren nach einem der vorhergehenden Ansprüche, wobei das Extrahieren der Textmerkmale aus der Testfallspezifikation Folgendes umfasst:

Teilen der Testfallspezifikation in einen Satz von Spezifikationswörtern;
Durchführen von Part-of-speech-Tagging an den Wörtern in dem Satz von Spezifikationswörtern; und
Entfernen von Stoppwörtern aus dem Satz von Spezifikationswörtern.

9. Verfahren nach Anspruch 8, wobei das Erzeugen des Merkmalsvektors Folgendes umfasst:

Auswählen aller Verben aus dem Satz von Spezifikationswörtern; und
Auswählen aller Substantive und Adjektive aus dem Satz von Spezifikationswörtern, die ein Auswahlkriterium erfüllen, wobei optional das Auswahlkriterium eine Häufigkeit des Auftretens innerhalb des Satzes von Spezifikationswörtern umfasst.

10. Verfahren nach Anspruch 9, ferner umfassend:

Erzeugen einer Mehrzahl erweiterter Merkmalsvektoren aus dem Merkmalsvektor, wobei die Mehrzahl erweiterter Merkmalsvektoren als Teilmengen des Merkmalsvektors erzeugt wird; und
Trainieren eines Klassifikators, der verwendet wird, um den Merkmalsvektor unter Verwendung der Mehrzahl erweiterter Merkmalsvektoren zu der Mehrzahl verfügbarer Testskripts zuzuordnen.

11. Verfahren nach einem der vorhergehenden Ansprüche, wobei das Zuordnen des Merkmalsvektors zu der Mehrzahl verfügbarer Testskripts Folgendes umfasst:

Erzeugen eines Markierungsvektors für jedes der Mehrzahl verfügbarer Testskripts; und
Klassifizieren des Markierungsvektors unter Verwendung eines Textklassifikators, wobei optional das Erzeugen des Markierungsvektors für jedes der Mehrzahl verfügbarer Testskripts Erzeugen eines Vektors von Begriffen in dem Testskript für jedes Testskript in der Mehrzahl verfügbarer Testskripts umfasst, wobei optional das Klassifizieren des Markierungsvektors unter Verwendung einer Eins-gegen-alle-Klassifizierungsstrategie erfolgt.

12. Verfahren nach einem der vorhergehenden Ansprüche, ferner umfassend:
Erzeugen eines Vorhersagewerts, der mit jedem der Mehrzahl verfügbarer Testskripts assoziiert ist, wobei die Auswahl eines oder mehrerer der Mehrzahl verfügbarer Testskripts zur Ausführung in Reaktion auf die Zuordnung des Merkmalsvektors basierend auf dem Vorhersagewert erfolgt, wobei optional die Auswahl des einen oder der mehreren der Mehrzahl verfügbarer Testskripte zur Ausführung in Reaktion auf die Zuordnung des Merkmalsvektors basierend darauf durchgeführt wird, ob ein assoziierter Vorhersagewert größer als ein Schwellenwert ist, und wobei ferner optional der Konfidenzwert für jedes der ausgewählten Testskripts basierend auf dem mit jedem der ausgewählten Testskripts assoziierten Vorhersagewerts erzeugt wird.

13. Verfahren nach einem der vorhergehenden Ansprüche, ferner umfassend:

Ausgeben (822) einer Identifikation der ausgewählten Testskripts und assoziierter Konfidenzwerte über eine Benutzerschnittstelle; und
Ausführen (824) der ausgewählten Skripts, und
ferner optional umfassend:

Empfangen einer Benutzereingabe in Reaktion auf das Ausgeben der Identifikation der ausgewählten Testskripts; und
Ausführen der ausgewählten Testskripts in Reaktion auf die Benutzereingaben.

14. System (1100) zum Testen eines Netzwerkknotens in einem Kommunikationssystem, wobei das System zu Folgendem konfiguriert ist:

Erhalten (702) einer Anforderungsspezifikation in natürlicher Sprache, die eine mit dem Netzwerkknoten assoziierte Testanforderung beschreibt;
Auswählen (704) einer oder mehrerer Testfallspezifikationen aus einer Bibliothek von Testfallspezifikationen basierend auf der Anforderungsspezifikation in natürlicher Sprache, wobei die eine oder die mehreren Testfallspezifikationen ein unstrukturiertes Eingabeformat umfassen;
Extrahieren (706) von Textmerkmalen aus der einen oder den mehreren Testfallspezifikationen;
Erzeugen (708) eines Merkmalsvektors, der die extrahierten Textmerkmale aus der einen oder den mehreren Testfallspezifikationen umfasst;
Zuordnen (710) des Merkmalsvektors zu einer Mehrzahl verfügbarer Testskripts;
Auswählen (712) eines oder mehrerer der Mehrzahl verfügbarer Testskripts zur Ausführung in Reaktion auf das Zuordnen des Merkmalsvektors; und
für eines oder mehrere der ausgewählten Testskripts Erzeugen (714) eines Konfidenzwerts, der eine Konfidenz einer Assoziation der Testfallspezifikation mit dem ausgewählten Testskript misst.

**Revendications**

1. Procédé de test d'un nœud de réseau dans un système de communication, comprenant :

l'obtention (702) d'une spécification d'exigence de langage naturel qui décrit une exigence de test associée au nœud de réseau ;
la sélection (704) d'une ou plusieurs spécifications de cas de test dans une bibliothèque de spécifications de cas de test sur la base de la spécification d'exigence de langage naturel, dans lequel la ou les spécifications de cas de test comprennent un format d'entrée non structuré ;
l'extraction (706) de caractéristiques textuelles à partir de la ou des spécifications de cas de test ;
la génération (708) d'un vecteur de caractéristiques comprenant les caractéristiques textuelles extraites à partir de la ou des spécifications de cas de test ;
le mappage (710) du vecteur de caractéristiques avec une pluralité de scripts de test disponibles ;
la sélection (712) d'un ou plusieurs de la pluralité de scripts de test disponibles pour une exécution en réponse au mappage du vecteur de caractéristiques ; et
pour un ou plusieurs des scripts de test sélectionnés, la génération (714) d'un score de confiance qui mesure une confiance d'une association de la spécification de cas de test au script de test sélectionné.

2. Procédé selon la revendication 1, dans lequel la sélection de la ou des spécifications de cas de test comprend :

l'analyse (802) de la spécification d'exigence de langage naturel à l'aide d'une technique de traitement de langage automatique ; et
pour une pluralité de spécifications de cas de test dans la bibliothèque de spécifications de cas de test, la génération (804) d'un score de pertinence qui représente une pertinence de la spécification d'exigence de langage naturel par rapport à la spécification de cas de test ; et
la sélection (806) de la spécification de cas de test sur la base du score de pertinence associé.

3. Procédé selon la revendication 2, dans lequel la sélection de la ou des spécifications de cas de test sur la base du score de pertinence associé comprend au moins l'une parmi :

la sélection de la ou des spécifications de cas de test sur la base du score de pertinence associé en réponse au fait que le score de pertinence est supérieur à un seuil prédéterminé ; et
la sélection d'une spécification de cas de test parmi la pluralité de spécifications de cas de test présentant un score de pertinence le plus élevé.

4. Procédé selon l'une quelconque des revendications 2 à 3, dans lequel l'analyse de la spécification d'exigence de langage naturel à l'aide d'un traitement de langage automatique comprend l'identification de termes clés dans la spécification d'exigence de langage naturel.

5. Procédé selon l'une quelconque des revendications 2 à 4, comprenant en outre :

l'obtention d'un retour d'information d'utilisateur associé à une spécification de cas de test d'entraînement dans la bibliothèque de spécifications de cas de test ;
dans lequel le score de pertinence associé à la spécification de cas de test d'entraînement est basé sur le retour d'information d'utilisateur, facultativement dans lequel le retour d'information d'utilisateur comprend une indication indiquant si la spécification de cas de test d'entraînement était pertinente, neutre ou non pertinente.

6. Procédé selon l'une quelconque des revendications 2 à 5, dans lequel les scores de pertinence sont générés à l'aide d'une métrique de similarité de sémantique de texte par rapport à la spécification d'exigence de langage naturel et à la pluralité de spécifications de cas de test dans la bibliothèque de spécifications de cas de test.

7. Procédé selon l'une quelconque des revendications précédentes, dans lequel les spécifications de cas de test et/ou les spécifications d'exigence sont écrites dans différentes langues humaines.

8. Procédé selon l'une quelconque des revendications précédentes, dans lequel l'extraction des caractéristiques textuelles à partir de la spécification de cas de test comprend :

la division de la spécification de cas de test en un ensemble de mots de spécification ;
la réalisation d'un étiquetage morphosyntaxique sur les mots dans l'ensemble de mots de spécification ; et
la suppression de mots vides de l'ensemble de mots de spécification.

9. Procédé selon la revendication 8, dans lequel la génération du vecteur de caractéristiques comprend :

la sélection de tous les verbes de l'ensemble de mots de spécification ; et
la sélection de tous les noms et de tous les adjectifs de l'ensemble de mots de spécification qui remplissent un critère de sélection, facultativement dans lequel le critère de sélection comprend une fréquence d'apparition dans l'ensemble de mots de spécification.

10. Procédé selon la revendication 9, comprenant en outre :

la génération d'une pluralité de vecteurs de caractéristiques augmentés à partir du vecteur de caractéristiques, dans lequel la pluralité de vecteurs de caractéristiques augmentés sont générés en tant que sous-ensembles du vecteur de caractéristiques ; et
l'entraînement d'un classificateur qui est utilisé pour mapper le vecteur de caractéristiques avec la pluralité de scripts de test disponibles à l'aide de la pluralité de vecteurs de caractéristiques augmentés.

11. Procédé selon l'une quelconque des revendications précédentes, dans lequel le mappage du vecteur de caractéristiques avec une pluralité de scripts de test disponibles comprend :

la génération d'un vecteur d'étiquette pour chacun de la pluralité de scripts de test disponibles ; et
la classification du vecteur d'étiquette à l'aide d'un classificateur de texte, facultativement dans lequel la génération du vecteur d'étiquette pour chacun de la pluralité de scripts de test disponibles comprend la génération, pour chaque script de test dans la pluralité de scripts de test disponibles, d'un vecteur de termes dans le script de test, facultativement dans lequel la classification du vecteur d'étiquette est réalisée à l'aide d'une stratégie de classification d'un par rapport au nombre total.

12. Procédé selon l'une quelconque des revendications précédentes, comprenant en outre :
la génération d'un score de prédiction associé à chacun de la pluralité de scripts de test disponibles, dans lequel la sélection d'un ou plusieurs de la pluralité de scripts de test disponibles pour une exécution en réponse au mappage du vecteur de caractéristiques est réalisée sur la base du score de prédiction, facultativement dans lequel la sélection du ou des scripts de la pluralité de scripts de test disponibles pour une exécution en réponse au mappage du vecteur de caractéristiques est réalisée sur la base de la détermination si un score de prédiction associé est ou non supérieur à une valeur seuil, en outre facultativement dans lequel le score de confiance pour chacun des scripts de test sélectionnés est généré sur la base du score de prédiction associé à chacun des scripts de test sélectionnés.

13. Procédé selon l'une quelconque des revendications précédentes, comprenant en outre :

la délivrance (822) d'une indication des scripts de test sélectionnés et des scores de confiance associés via une interface utilisateur ; et
l'exécution (824) des scripts de test sélectionnés, et
en outre facultativement comprenant :

la réception d'une entré utilisateur en réponse à la délivrance de l'identification des scripts de test sélectionnés ; et
l'exécution des scripts de test sélectionnés en réponse aux entrées d'utilisateur.

14. Système (1100) de test d'un nœud de réseau dans un système de communication, dans lequel le système est configuré pour :

obtenir (702) une spécification d'exigence de langage naturel qui décrit une exigence de test associée au nœud de réseau ;
sélectionner (704) une ou plusieurs spécifications de cas de test dans une bibliothèque de spécifications de cas de test sur la base de la spécification d'exigence de langage naturel, dans lequel la ou les spécifications de cas de test comprennent un format d'entrée non structuré ;
extraire (706) des caractéristiques textuelles à partir de la ou des spécifications de cas de test ;
générer (708) un vecteur de caractéristiques comprenant les caractéristiques textuelles extraites à partir de la ou des spécifications de cas de test ;
mapper (710) le vecteur de caractéristiques avec une pluralité de scripts de test disponibles ;
sélectionner (712) un ou plusieurs de la pluralité de scripts de test disponibles pour une exécution en réponse au mappage du vecteur de caractéristiques ; et
pour un ou plusieurs des scripts de test sélectionnés, générer (714) un score de confiance qui mesure une confiance d'une association de la spécification de cas de test au script de test sélectionné.

FIG. 1

FIG. 2

**Phase 1**

Requirement Specification 20 → AI Test Case Specification Recommendation 200 → Test Case Specification(s) 25

202

**Phase 2**

Preprocessing 205 → Feature Engineering 210 → Regularization 220 → Text Classification 230

Test Script(s) 30

*FIG. 3*

Test Case
Specification
25

↓

Clean and convert to lower case
402

↓

Tokenize
404

↓

Multilingual POS-tagging
406

↓

Stopword Removal
408

↓

Preprocessed
Test Case
Specification
115

## FIG. 4A

Preprocessed
Test Case
Specification
115

↓

Feature Selection
412

↓

Feature Vector
150

## FIG. 4B

Feature Vector
152A

Feature Vector
150

Data
Augmentation
420

Feature Vector
152B

Feature Vector
152N

## FIG. 4C

150

['time','calculate','voltage']

Data
Augmentation
420

152

['time','calculate','voltage']
['time','calculate']
['time','voltage']
['calculate','voltage']

## FIG. 4D

Prediction Score
Vector
454

Prediction
Score(0)

Prediction
Score(1)

⋮

Prediction
Score(N)

Augmented
Feature Vector
152

Classifier
450

Label Vector
452

Label(0)

Label(1)

⋮

Label(N)

*FIG. 4E*

FIG. 5

Requirement
Specification
20

Feature Engineering

['temperatura', 'calcular', 'voltaje']

Feature
Vector

Mapping

Alternative 1
Alternative 2

Label Vector

*FIG. 6*

```
┌─────────────────────────────────────────────────┐
│   Obtain natural language requirement specification │
│                       702                           │
└─────────────────────────────────────────────────┘
                        │
                        ▼
┌─────────────────────────────────────────────────┐
│ Select test case specification(s) based on natural language │
│              requirement specification              │
│                       704                           │
└─────────────────────────────────────────────────┘
                        │
                        ▼
┌─────────────────────────────────────────────────┐
│   Extract textual features from test case specification(s) │
│                       706                           │
└─────────────────────────────────────────────────┘
                        │
                        ▼
┌─────────────────────────────────────────────────┐
│      Generate feature vector from textual features  │
│                       708                           │
└─────────────────────────────────────────────────┘
                        │
                        ▼
┌─────────────────────────────────────────────────┐
│          Map feature vector to test scripts         │
│                       710                           │
└─────────────────────────────────────────────────┘
                        │
                        ▼
┌─────────────────────────────────────────────────┐
│    Select test scripts for execution based on mapping │
│                       712                           │
└─────────────────────────────────────────────────┘
                        │
                        ▼
┌─────────────────────────────────────────────────┐
│   Generate confidence score for selected test scripts │
│                       714                           │
└─────────────────────────────────────────────────┘
```

700

*FIG. 7*

Analyzing the natural language requirement specification
802

Generating relevancy scores for the test case
specifications
804

Selecting a test case specification based on the relevance
scores
806

## FIG. 8A

Output identification of selected test scripts and
confidence scores via user interface
822

Execute selected test scripts
824

## FIG. 8B

Communication Device
900

Transceiver
912

Processor
916

Memory
918

## FIG. 9

Radio Access Network Node
1000

Network Interface
1004

Wireless Transceiver
1002

Processor
1006

Memory
1008

## FIG. 10

FIG. 11

**REFERENCES CITED IN THE DESCRIPTION**

**Patent documents cited in the description**

- CN 111176996 A

- US 20200019492 A1